(19) Europäisches Patentamt
European Patent Office
Office européen des brevets

(11) **EP 3 971 417 B1**

(12) **EUROPEAN PATENT SPECIFICATION**

(45) Date of publication and mention
of the grant of the patent:
**15.04.2026 Bulletin 2026/16**

(21) Application number: **20804859.5**

(22) Date of filing: **14.05.2020**

(51) International Patent Classification (IPC):
*F04B 49/06* (2006.01)     *F04B 35/04* (2006.01)
*F04B 51/00* (2006.01)     *F04B 49/12* (2006.01)
*F25B 49/02* (2006.01)     *F25D 11/02* (2006.01)

(52) Cooperative Patent Classification (CPC):
**F04B 49/06; F04B 35/045; F04B 49/12;**
**F25B 49/025; F25D 11/02;** F04B 2201/0206;
F04B 2203/0402; F04B 2203/0404; F04B 2207/045;
F25B 2600/021; F25B 2600/0253; Y02B 30/70;
Y02B 40/00

(86) International application number:
**PCT/CN2020/090125**

(87) International publication number:
**WO 2020/228753 (19.11.2020 Gazette 2020/47)**

(54) **LINEAR COMPRESSOR AND SET POINT CONTROL METHOD**

LINEARKOMPRESSOR UND VERFAHREN ZUR STEUERUNG EINES SOLLWERTS

COMPRESSEUR LINÉAIRE ET SYSTÈME DE COMMANDE DE VALEUR DE CONSIGNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2019 US 201916412787**

(43) Date of publication of application:
**23.03.2022 Bulletin 2022/12**

(73) Proprietors:
• **Haier Smart Home Co., Ltd.
Qingdao, Shandong 266101 (CN)**
• **Haier US Appliance Solutions, Inc.
Wilmington, DE 19801 (US)**

(72) Inventors:
• **HAHN, Gregory William
Wilmington, Delaware 19801 (US)**
• **KUSUMBA, Srujan
Wilmington, Delaware 19801 (US)**

(74) Representative: **Winter, Brandl - Partnerschaft
mbB
Alois-Steinecker-Straße 22
85354 Freising (DE)**

(56) References cited:
WO-A1-2007/123323     WO-A1-2016/068675
CN-A- 101 291 131     CN-A- 106 605 061
US-A1- 2011 318 193     US-A1- 2016 215 770
US-A1- 2019 316 577     US-A1- 2019 319 558

**Description**

FIELD OF THE INVENTION

The present subject matter relates generally to linear compressors, such as linear compressors for refrigerators and other appliances.

BACKGROUND OF THE INVENTION

Some refrigerators may include sealed systems for cooling chilled chambers of the refrigerators. The sealed systems generally include a compressor that generates compressed refrigerant during operation of the sealed systems. The compressed refrigerant flows to an evaporator where heat exchanges from the chilled chambers, to cool the chilled chambers and food items located therein.

Certain refrigerators have included linear compressors for compressing refrigerant. Linear compressors generally include a piston and a driving coil. The driving coil receives a current that generates a force for oscillating the piston (i.e., sliding the piston forward and backward within a chamber having a cylinder head). An elastic element, such as a spring, may be provided to aid in such oscillation. During motion of the piston within the chamber, the piston compresses refrigerant. Generally, the force of gas compression acts to push the piston away from the chamber and cylinder head.

Motion of the piston within the chamber may be controlled such that the piston does not crash against another component of the linear compressor during motion of the piston within the chamber. The overall motion may be proportional to a stroke length, which may be dependent upon a setpoint of the piston or motor operating the piston. Furthermore, cooling capacity is proportional to the stroke length and setpoint. Generally, the setpoint is a preset physical point determined by the mechanical mounting of the motor to the linear compressor, and therefore is generally not adjustable. Moreover, as stated above, increasing stroke length motion within the chamber may cause undesirable mechanical crashing.

Accordingly, it would be useful to provide a linear compressor and method of operation for addressing one or more of the above-identified issues. In particular, a linear compressor and methods of setpoint and cooling capacity control would be especially advantageous.

WO 2016/068675 A1 disclosed a compressor control apparatus which includes a rectifying unit configured to rectify power applied from the outside, a DC link unit configured to include a pair of capacitors and smooth the rectified voltage, an inverter unit configured to include a pair of switches and convert the smoothed DC voltage into a driving voltage of a motor according to a control signal, and a control unit configured to generate the control signal, wherein the control unit applies a DC offset voltage to the driving voltage according to a direction of a current applied to the motor on the basis of a result obtained by comparing voltages across the pair of capacitors.

WO 2007/123323 A1 disclosed an apparatus for controlling an operation of a reciprocating compressor, which includes: a control unit for detecting a current pushed amount of a piston when a TDC is detected as an inflection point of a phase difference between stroke and current, comparing the current pushed amount with a pushed amount reference value, and applying a DC voltage applied to a linear motor based on the comparison result. An AC voltage and a DC voltage are applied to the linear motor to increase the stroke, and when the TDC is detected, the current pushed amount is calculated and compared with the pushed amount reference value, and then, the DC voltage or a DC current applied to the linear motor is varied based on the comparison result, thereby obtaining a maximum compression volume without collision of the piston.

US 2011/318193 A1 disclosed a linear compressor which makes it possible to adjust a variable rate of a cooling capacity. The linear compressor includes a fixed member having a compression space therein, a movable member linearly reciprocated in the fixed member to compress a refrigerant sucked into the compression space, one or more springs provided to elastically support the movable member in the motion direction of the movable member, a motor unit including a motor connected to the movable member to linearly reciprocate the movable member in the axial direction and a capacitor connected in series to the motor, and a motor control unit controlling an AC voltage applied to the motor to adjust a variable rate of a cooling capacity by the reciprocation of the movable member.

BRIEF DESCRIPTION OF THE INVENTION

Aspects and advantages of the invention will be set forth in part in the following description, or may be obvious from the description, or may be learned through practice of the invention.

In one example aspect of the present disclosure, an appliance is provided according to claim 1.

In another example aspect of the present disclosure, a method of operating a linear compressor is provided according to claim 6.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

BRIEF DESCRIPTION OF THE DRAWINGS

A full and enabling disclosure of the present invention, including the best mode thereof, directed to one of ordinary skill in the art, is set forth in the specification, which makes reference to the appended figures.

FIG. 1 is a front elevation view of a refrigerator appliance according to an example embodiment of the present disclosure.

FIG. 2 is schematic view of certain components of the refrigerator appliance of FIG. 1.

FIG. 3 provides a perspective view of a linear compressor according to an example embodiment of the present disclosure.

FIG. 4 provides a side section view of the linear compressor of FIG. 3.

FIG. 5 provides an exploded view of the linear compressor of FIG. 4.

FIG. 6 provides a plot of cooling capacity and associated efficiency for a conventional linear compressor compared to the linear compressor of FIG. 3.

FIG. 7 provides a method for operating a linear compressor according to an example embodiment of the present disclosure.

FIG. 8 provides a flow chart illustrating a method for operating a linear compressor according to an example embodiment of the present disclosure.

FIG. 9 provides a movement plot of a linear compressor model.

FIG. 10 provides a plot of a variable frequency waveform with associated DC voltage for setpoint control, according to an example embodiment of the present disclosure.

FIG. 11 provides a plot of a variable frequency waveform with an applied phase or amplitude skew for setpoint control, according to an example embodiment of the present disclosure.

DETAILED DESCRIPTION

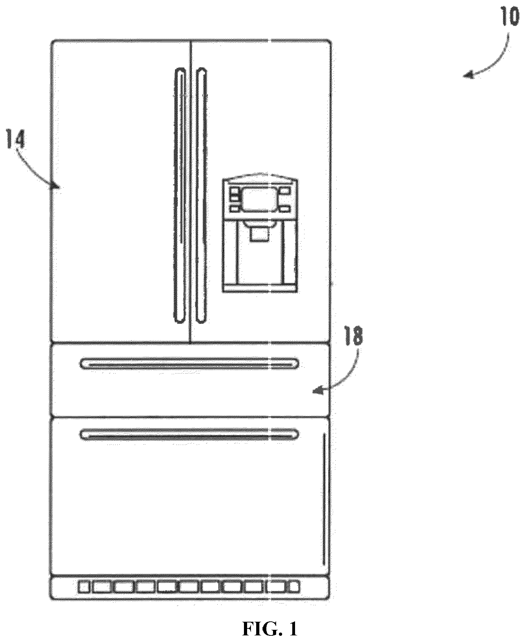

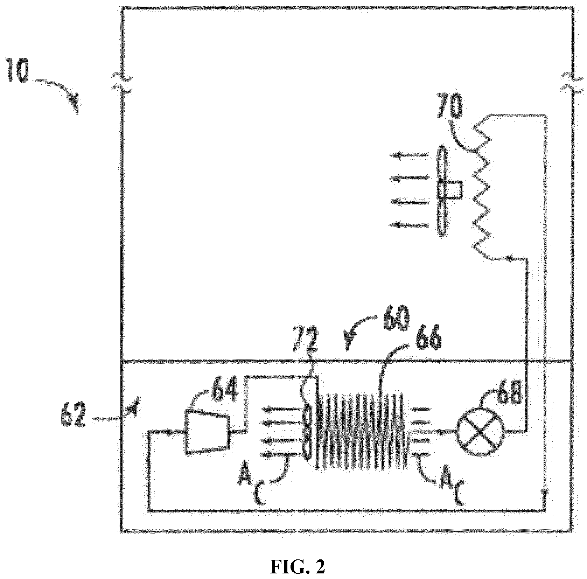

FIG. 1 depicts a refrigerator appliance 10 that incorporates a sealed refrigeration system 60 (FIG. 2). It should be appreciated that the term "refrigerator appliance" is used in a generic sense herein to encompass any manner of refrigeration appliance, such as a freezer, refrigerator, refrigerator/freezer combination, and any style or model of conventional refrigerator. In addition, it should be understood that the present subject matter is not limited to use in appliances. Thus, the present subject matter may be used for any other suitable purpose, such as vapor compression within air conditioning units or air compression within air compressors. As illustrated, the refrigerator appliance 10 includes one or more compartments 14 and 18 for chilling food or other items by manner of refrigeration as described herein.

FIG. 2 is a schematic view of certain components of refrigerator appliance 10, including a sealed refrigeration system 60 of refrigerator appliance 10. A machinery compartment 62 contains components for executing a known vapor compression cycle for cooling air. The components include a compressor 64, a condenser 66, an expansion device 68, and an evaporator 70 connected in series and charged with a refrigerant. As will be understood by those skilled in the art, refrigeration system 60 may include additional components, e.g., at least one additional evaporator, compressor, expansion device, and/or condenser. As an example, refrigeration system 60 may include two evaporators.

Within refrigeration system 60, refrigerant flows into compressor 64, which operates to increase the pressure of the refrigerant. This compression of the refrigerant raises its temperature, which is lowered by passing the refrigerant through condenser 66. Within condenser 66, heat exchange with ambient air takes place so as to cool the refrigerant. A fan 72 is used to pull air across condenser 66, as illustrated by arrows $A_C$, so as to provide forced convection for a more rapid and efficient heat exchange between the refrigerant within condenser 66 and the ambient air. Thus, as will be understood by those skilled in the art, increasing air flow across condenser 66 can, e.g., increase the efficiency of condenser 66 by improving cooling of the refrigerant contained therein.

An expansion device (e.g., a valve, capillary tube, or other restriction device) 68 receives refrigerant from condenser 66. From expansion device 68, the refrigerant enters evaporator 70. Upon exiting expansion device 68 and entering evaporator 70, the refrigerant drops in pressure. Due to the pressure drop and/or phase change of the refrigerant, evaporator 70 is cool relative to compartments 14 and 18 of refrigerator appliance 10. As such, cooled air is produced and refrigerates compartments 14 and 18 of refrigerator appliance 10. Thus, evaporator 70 is a type of heat exchanger which transfers heat from air passing over evaporator 70 to refrigerant flowing through evaporator 70.

Collectively, the vapor compression cycle components in a refrigeration circuit, associated fans, and associated compartments are sometimes referred to as a sealed refrigeration system operable to force cold air through compartments 14, 18 (FIG. 1). The refrigeration system 60 depicted in FIG. 2 is provided by way of example only. Thus, it is within the scope of the present subject matter for other configurations of the refrigeration system to be used as well.

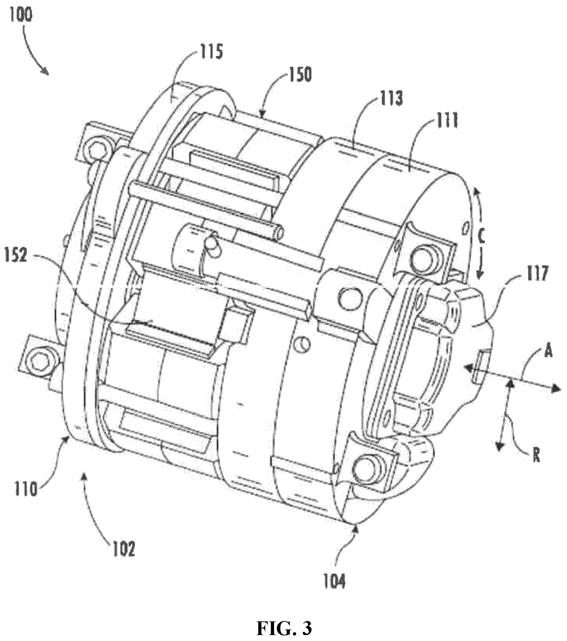

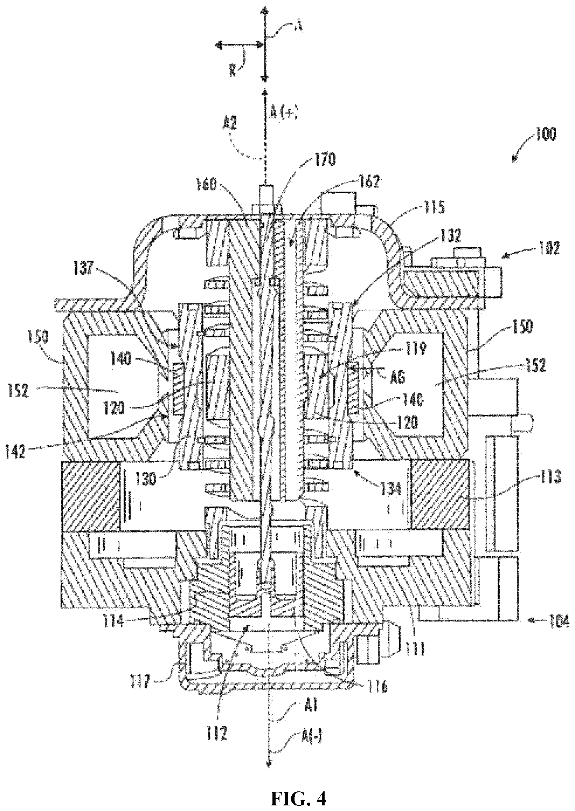

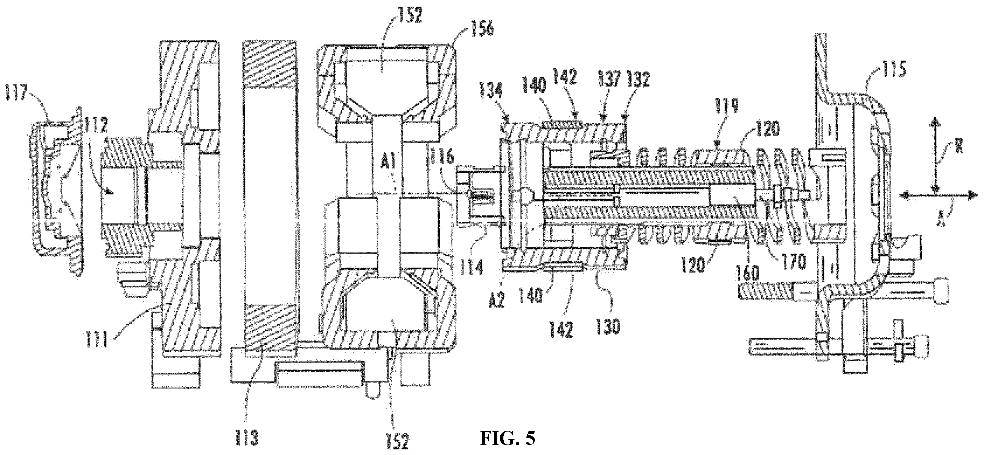

FIG. 3 provides a perspective view of a linear compressor 100 according to an example embodiment of the present disclosure. FIG. 4 provides a side section view of linear compressor 100. FIG. 5 provides an exploded side section view of linear compressor 100. As discussed in greater detail below, linear compressor 100 is operable to increase a pressure of fluid within a chamber 112 of linear compressor 100. Linear compressor 100 may be used to compress any suitable fluid, such as refrigerant, a working fluid, or air. In particular, linear compressor 100 may be used in a refrigerator appliance, such as refrigerator appliance 10 (FIG. 1) in which linear compressor 100 may be used as compressor 64 (FIG. 2). As illustrated, linear compressor 100 defines an axial direction A, a radial direction R, and a circumferential direction C. Linear compressor 100 may be enclosed within a hermetic or air-tight shell (not shown). The hermetic shell can, e.g., hinder or prevent refrigerant from leaking or escaping from refrigeration system 60.

Turning now to FIG. 4, linear compressor 100 includes a casing 110 that extends between a first end portion 102 and a second end portion 104, e.g., along the axial direction A. Casing 110 includes various static or non-moving structural components of linear compressor 100. In particular, casing 110 includes a cylinder assembly 111 that defines a chamber 112. Cylinder assembly 111 is positioned at or adjacent second end portion 104 of casing 110. Chamber 112 extends longitudinally along the axial direction A. Casing 110 also includes a motor mount mid-section 113 and an end cap 115 positioned opposite each other about a motor. A stator, e.g., including an outer back iron 150 and a driving coil 152, of the motor is mounted or secured to casing 110, e.g., such that the stator is sandwiched between motor mount mid-section 113 and end cap 115 of casing 110. Linear compressor 100 also includes valves (such as a discharge valve assembly 117 at an end of chamber 112) that permit refrigerant to enter and exit chamber 112 during operation of linear compressor 100.

A piston assembly 114 with a piston head 116 is slidably received within chamber 112 of cylinder assembly 111. In particular, piston assembly 114 is slidable along a first axis A1 within chamber 112. The first axis A1 may include a negative axial direction A(-) and a positive axial direction A(+), and may be substantially parallel to the axial direction A. Thus, piston assembly 114 may alternately slide or oscillate, e.g., the piston head 116, in the negative axial direction A(-) and the positive axial direction A(+). During sliding of piston head 116 within chamber 112, piston head 116 compresses refrigerant within chamber 112. As an example, from a top dead center position (i.e., top dead center point), piston head 116 can slide within chamber 112 towards a bottom dead center position (i.e., bottom dead center point) along the positive axial direction A(+), i.e., an expansion stroke of piston head 116. When piston head 116 reaches the bottom dead center position, piston head 116 changes directions and slides in chamber 112 along the negative axial direction A(-) back towards the top dead center position, i.e., a compression stroke of piston head 116. It should be understood that linear compressor 100 may include an additional piston head and/or additional chamber at an opposite end of linear compressor 100. Thus, linear compressor 100 may have multiple piston heads in alternative example embodiments.

Linear compressor 100 also includes an inner back iron assembly 130. Inner back iron assembly 130 is positioned in the stator of the motor. In particular, outer back iron 150 and/or driving coil 152 may extend about inner back iron assembly 130, e.g., along the circumferential direction C. Inner back iron assembly 130 extends between a first end portion 132 and a second end portion 134, e.g., along the axial direction A.

Inner back iron assembly 130 also has an outer surface 137. At least one driving magnet 140 is mounted to inner back iron assembly 130, e.g., at outer surface 137 of inner back iron assembly 130. Driving magnet 140 may face and/or be exposed to driving coil 152. In particular, driving magnet 140 may be spaced apart from driving coil 152, e.g., along the radial direction R by an air gap AG. Thus, the air gap AG may be defined between opposing surfaces of driving magnet 140 and driving coil 152. Driving magnet 140 may also be mounted or fixed to inner back iron assembly 130 such that an outer surface 142 of driving magnet 140 is substantially flush with outer surface 137 of inner back iron assembly 130. Thus, driving magnet 140 may be inset within inner back iron assembly 130. In such a manner, the magnetic field from driving coil 152 may have to pass through only a single air gap (e.g., air gap AG) between outer back iron 150 and inner back iron assembly 130 during operation of linear compressor 100.

As may be seen in FIG. 4, driving coil 152 extends about inner back iron assembly 130, e.g., along the circumferential direction C. Driving coil 152 is operable to move the inner back iron assembly 130 along a second axis A2 during operation of driving coil 152. The second axis A2 may be substantially parallel to the axial direction A and/or the first axis A1. As an example, driving coil 152 may receive a current from a current source (not shown) in order to generate a magnetic field that engages driving magnet 140 and urges piston assembly 114 to move along the axial direction A in order to compress refrigerant within chamber 112 as described above and will be understood by those skilled in the art. In particular, the magnetic field of driving coil 152 may engage driving magnet 140 in order to move inner back iron assembly 130 along the second axis A2 and piston head 116 along the first axis A1 during operation of driving coil 152. Thus, driving coil 152 may slide piston assembly 114 between the top dead center position and the bottom dead center position, e.g., by moving inner back iron assembly 130 along the second axis A2, during operation of driving coil 152.

A piston flex mount 160 is mounted to and extends through inner back iron assembly 130. A coupling 170 extends between piston flex mount 160 and piston assembly 114, e.g., along the axial direction A. Thus, coupling 170 connects inner back iron assembly 130 and piston assembly 114 such that motion of inner back iron assembly 130, e.g., along the axial direction A or the second axis A2, is transferred to piston assembly 114. Piston flex mount 160 defines an input passage 162 that permits refrigerant to flow therethrough.

Linear compressor 100 may include various components for permitting and/or regulating operation of linear compressor 100. In particular, linear compressor 100 includes a controller (not shown) that is configured for regulating operation of linear compressor 100. The controller is in, e.g., operative, communication with the motor, e.g., driving coil 152 of the motor. Thus, the controller may selectively activate driving coil 152, e.g., by supplying current to driving coil 152, in order to compress refrigerant with piston assembly 114 as described above.

The controller includes memory and one or more processing devices such as microprocessors, CPUs or the like, such as general or special purpose microprocessors operable to execute programming instructions or micro-control code associated with operation of linear compressor 100. The memory can represent random access memory such as DRAM, or read only memory such as ROM or FLASH. The processor executes programming instructions stored in the memory. The memory can be a separate component from the processor or can be included onboard within the processor. Alternatively, the controller may be constructed without using a microprocessor, e.g., using a combination of discrete analog and/or digital logic circuitry (such as switches, amplifiers, integrators, comparators, flip-flops, AND gates, field programmable gate arrays (FPGA), and the like) to perform control functionality instead of relying upon software.

Linear compressor 100 also includes a spring assembly 120. Spring assembly 120 is positioned in inner back iron assembly 130. In particular, inner back iron assembly 130 may extend about spring assembly 120, e.g., along the circumferential direction C. Spring assembly 120 also extends between first and second end portions 102 and 104 of casing 110, e.g., along the axial direction A. Spring assembly 120 assists with coupling inner back iron assembly 130 to casing 110, e.g., cylinder assembly 111 of casing 110. In particular, inner back iron assembly 130 is fixed to spring assembly 120 at a middle portion 119 of spring assembly 120.

During operation of driving coil 152, spring assembly 120 supports inner back iron assembly 130. In particular, inner back iron assembly 130 is suspended by spring assembly 120 within the stator or the motor of linear compressor 100 such that motion of inner back iron assembly 130 along the radial direction R is hindered or limited while motion along the second axis A2 is relatively unimpeded. Thus, spring assembly 120 may be substantially stiffer along the radial direction R than along the axial direction A. In such a manner, spring assembly 120 can assist with maintaining a uniformity of the air gap AG between driving magnet 140 and driving coil 152, e.g., along the radial direction R, during operation of the motor and movement of inner back iron assembly 130 on the second axis A2. Spring assembly 120 can also assist with hindering side pull forces of the motor from transmitting to piston assembly 114 and being reacted in cylinder assembly 111 as a friction loss.

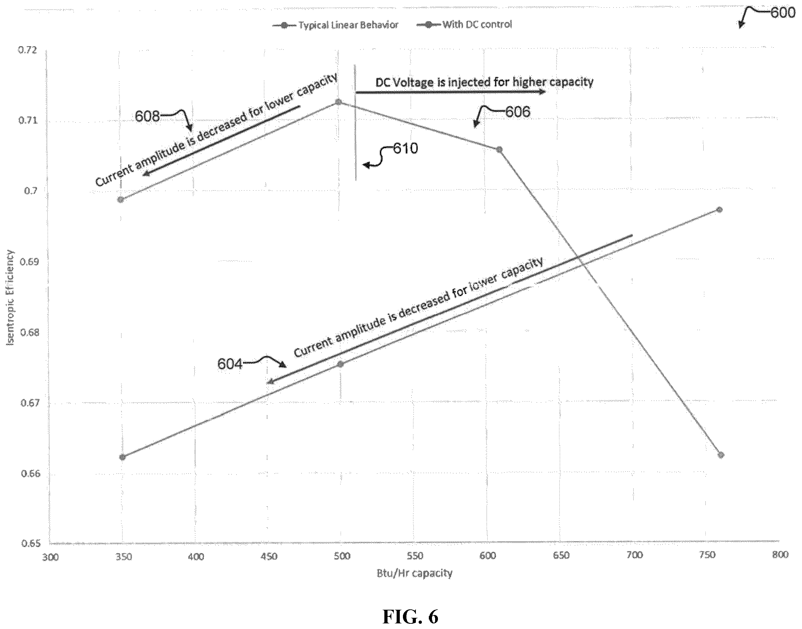

FIG. 6 provides a plot of cooling capacity and associated efficiency for a conventional linear compressor compared to the linear compressor 100 of FIG. 3. As illustrated, a conventional linear compressor may operate along curve 604, in a substantially linear manner. The curve 604 depicts decreased cooling capacity with decreased stroke length or current amplitude. It follows that as current and stroke length are increased, cooling capacity also increases linearly.

In contrast, the linear compressor 100 may operate along curve 606. As shown, a basic linear curve portion 608 exists such that there is a conventionally linear relationship between increasing current and cooling capacity until approximately capacity 610. Upon reaching capacity 610, a direct current (DC) voltage can be injected which offsets a resting setpoint (e.g., $L_0$, described more fully below) of the motor, and therefore offers increased cooling capacity with a decrease in efficiency. However, as illustrated, the overall efficiency of the linear compressor 100 is greater than that of a conventional linear compressor. For example, because the resting setpoint $L_0$ of the linear compressor 100 is decreased as compared to a conventional compressor at rest, there is reduced friction when compressing gas, which results in less heating of gases. However, when the resting setpoint $L_0$ of the linear compressor 100 is shifted due to injection of positive DC voltage, cooling capacity is increased while still retaining overall efficiency much higher than the conventional compressor cycle curve 604.

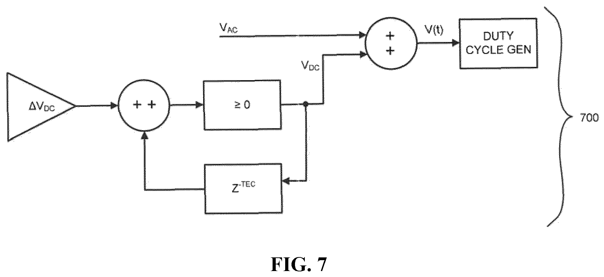

Turning now to FIG. 7, a method 700 is illustrated for operating a linear compressor according to an example embodiment of the present disclosure. Method 700 may be used to operate any suitable linear compressor, such as linear compressor 100 (FIG. 3). Moreover, it is understood that the entirety (or a portion) of the method 700 may be utilized as part of, or as an alternative to, any of the described methods herein. In particular, the method 700 may be utilized for selectively supplying or directing a DC voltage as a time varying voltage is supplied to the motor of linear compressor 100. As described above, the DC voltage may induce a positive extension force in the motor. Furthermore, the DC voltage may effectively shift a resting setpoint $L_0$ of the motor (at least only during application of the DC voltage).

As an example, the mechanical dynamic model for linear compressor 100 may be

$$F_m = \alpha i = M\ddot{x} + C\dot{x} + K(x - L_0) - F_{gas}$$

where

M is a moving mass of linear compressor 100;

$\alpha$ is a motor force constant;

$\ddot{x}$ is an acceleration of the motor of linear compressor 100;

C is a damping coefficient of linear compressor 100;

$\dot{x}$ is a velocity of the motor of linear compressor 100;

K is a spring stiffness of linear compressor 100;

x is a position of the moving mass of linear compressor 100;

$L_0$ is resting setpoint of linear compressor 100; and

$F_{gas}$ is a gas force.

Accordingly, a different $L_0$ can be obtained, at least temporarily, by changing DC voltage. Positive DC Voltage will increase the stroke length and further increase cooling capacity at a low clearance. Generally, the control objective of method 700 is to add $V_{dc}$ to increase $L_0$ and stroke length when higher cooling capacity is needed, required, or selected. For example, a control signal, temperature sensor, temperature selection apparatus, or other suitable control signal may be used to signal that higher cooling capacity is needed.

With respect to FIG. 7, the DC voltage is indicated as a variable value at $V_{dc}$. The time varying voltage is indicated at $V_{ac}$. A resulting applied voltage function for the combined DC voltage ($V_{dc}$) and time varying voltage ($V_{ac}$) is indicated at V(t), which controls a duty cycle generator to the motor. An index value for the DC voltage is indicated at $\Delta V_{dc}$. An index limit for the combined DC voltage ($V_{dc}$) may be provided in some embodiments. For instance, a lower index limit, such as 0 (e.g., as shown at FIG. 7) may be provided. Additionally or alternatively, although not shown in FIG. 7, an upper index limit (e.g., between 2 Volts and 5 Volts) may be provided. An index rate (e.g., between 0.25 second and 1.5 seconds) is indicated at $T_{EC}$, such that a delay in the combined DC voltage ($V_{dc}$) is indicated at $Z^{-TEC}$.

A determination may be made whether an increase in cooling capacity is required by signaling a change in DC voltage. If increased cooling capacity is required, the DC voltage ($V_{dc}$) is indexed higher (e.g., from a starting value of 0). In particular, the DC voltage ($V_{dc}$) is increased by the index value ($\Delta V_{dc}$). Moreover, the DC voltage ($V_{dc}$) is combined as a positive value with the time varying voltage ($V_{ac}$) to form the voltage function [V(t)]. Additionally, the DC voltage ($V_{dc}$) may be repeatedly increased by the index value ($\Delta V_{dc}$). Moreover, the repeated increases may occur at the index rate ($T_{EC}$) until the DC voltage ($V_{dc}$) exceeds the index limit (e.g., upper index limit) or until increased cooling capacity is no longer required. If increased cooling is no longer required, the DC voltage ($V_{dc}$) is decreased by the index value ($\Delta V_{dc}$) immediately, or as an indexed value, to zero volts DC.

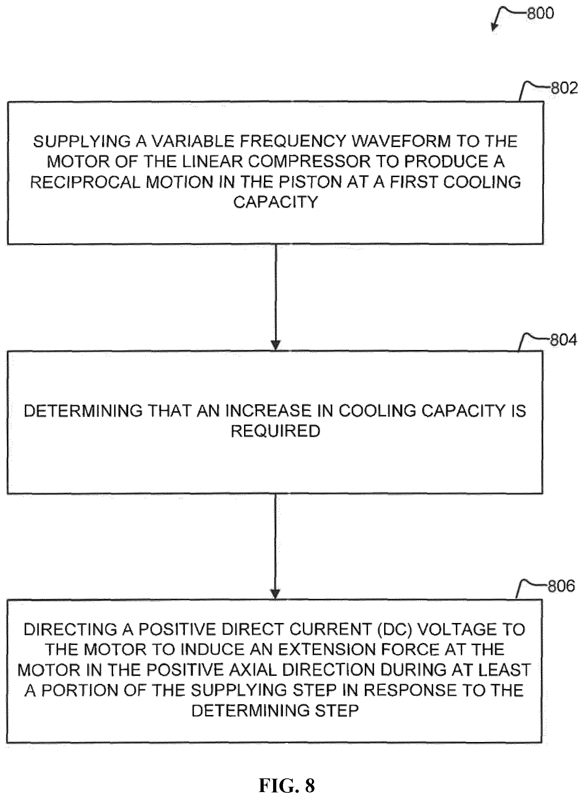

FIG. 8 provides a flow chart illustrating a method 800 for operating a linear compressor 100 according to an example embodiment of the present disclosure. Generally, the method 800 is substantially similar to the method 700. For example, the method 800 includes supplying a variable frequency waveform to the motor of the linear compressor to produce a reciprocal motion in the piston at a first cooling capacity, at block 802. The waveform may be the voltage function [V(t)] of FIG. 7.

Generally, the first cooling capacity may be a base capacity related to a resting setpoint $L_0$ of the linear compressor 100. Other first cooling capacities may be chosen, including those already having a small offset of the resting setpoint $L_0$ due to DC voltage injection or other scenarios.

Any suitable time varying voltage waveform may be supplied to the motor of linear compressor 100 at step 802. For example, the time varying voltage may have at least two frequencies components at step 802. Thus, the time varying voltage may be

$$v_a(t) = v_0[\sin(2\pi f_1 t) + \sin(2\pi f_2 t)]$$

where

$v_a$ is a voltage across the motor of linear compressor 100;

$f_1$ is a first frequency; and

$f_2$ is a second frequency.

The first and second frequencies $f_1$, $f_2$ may be about the resonant frequency of linear compressor 100. In particular, the first and second frequencies $f_1$, $f_2$ may be just greater than and just less than the resonant frequency of linear compressor 100, respectively. For example, the first frequency $f_1$ may be within five percent greater than the resonant frequency of linear compressor 100, and the second frequency $f_2$ may be within five percent less than the resonant frequency of linear compressor 100. In alternative example embodiments, the time varying voltage may have a single frequency at step 802.

The method 800 further includes determining that an increase in cooling capacity is required, at block 804. The determining may include receiving a discreet input indicating that a user has requested an increase in cooling capacity. The determining may also include determining that a pull-down event has occurred (such as by leaving a refrigerator door open, initiating an ice maker, or other scenarios). The determining may also include receiving indication from a temperature sensor, a temperature control interface, of other temperature control apparatuses.

The method 800 further includes directing a positive direct current (DC) voltage to the motor to induce an extension force at the motor in the positive axial direction during at least a portion of the supplying step in response to the determining step, at block 806. This extension force positively shifts the resting setpoint $L_0$, as described below.

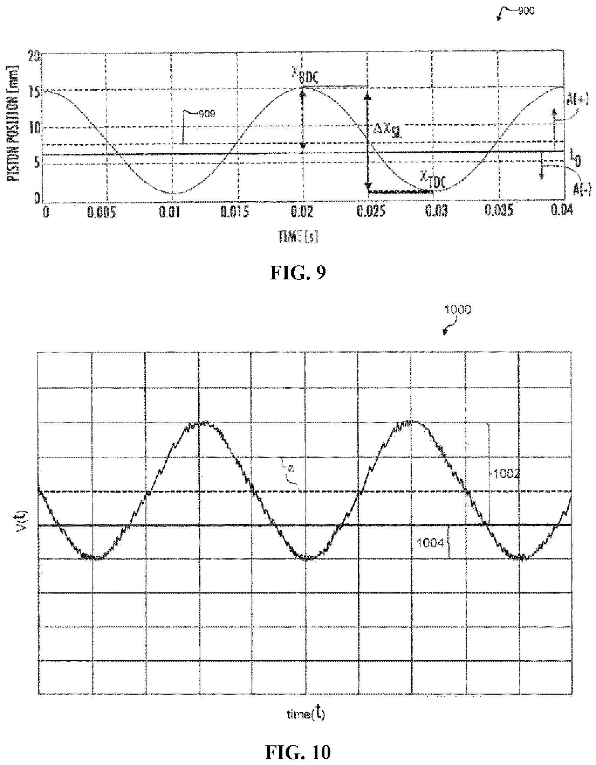

An example of shifting the resting setpoint $L_0$ is illustrated generally at FIG. 9. In particular, FIG. 9 illustrates an example movement plot of a linear compressor model, e.g., taken during step 806. As may be seen in FIG. 9, the movement or oscillation of piston assembly 114 may be plotted as a sinusoidal wave wherein x corresponds to piston assembly 114 position (i.e., relative to the chamber 112). Thus, the position at which $x = 0$ is understood to correspond to the base portion of chamber 112 (e.g., a cylinder head). As shown, the sinusoidal wave is defined across one or more strokes of the piston assembly 114. Thus, the sinusoidal wave may be formed from one or more sinusoidal cycles defined by movement (e.g., of piston head 116) from a midpoint to a top dead center point, to a bottom dead center point, and back to the midpoint. The position 909 is the actual midpoint of the sinusoidal wave. In other words, 909 is the midpoint of stroke length (i.e., $\Delta x_{SL}$) between bottom dead center (i.e., $x_{BDC}$) and top dead center (i.e., $x_{TDC}$). In a free-floating or ideal system, piston assembly 114 would naturally oscillate about its equilibrium point $L_0$ (i.e., $x_{mid} = L_0$). However, positive DC voltage effectively moves $L_0$ upward in the positive axial direction A(+). In other words, extension of the piston assembly 114 in the positive axial direction A(+) is greater than extension in the negative axial direction A(-). Accordingly, while the physical setpoint of $L_0$ remains unchanged, the midpoint of oscillation (909, effectively $L_0$) is shifted through application of a positive DC voltage.

In certain example embodiments, the DC voltage of step 806 may be directed continuously or constantly after the determination is made at step 804. Thus, the positive DC voltage may be a constant voltage that is applied during both the positive axial movement and negative axial movement of the piston assembly 114. Moreover, the positive DC voltage may be applied across a plurality of sinusoidal cycles (i.e., strokes) of the piston assembly 114 as it travels between bottom dead center ($x_{BDC}$) and top dead center ($x_{TDC}$). Notably, directing a constant DC voltage may preserve the existing harmonics for the sinusoidal motion within linear compressor 100.

FIG. 10 provides a plot of a variable frequency waveform with associated DC voltage for setpoint control, according to an example embodiment of the present disclosure. As shown, the waveform 1000 has a midpoint L0 which has been shifted upwards due to injection of positive DC voltage constantly over multiple cycles of the waveform 1000. It is apparent then, that the area under the sinusoidal curve represented at 1002 is greater than 1004, which allows for increased cooling capacity on-the-fly, without physically altering the structure of the linear compressor 100.

In additional or alternative example embodiments, the DC voltage of step 806 may be directed intermittently after the determination is made at step 804.

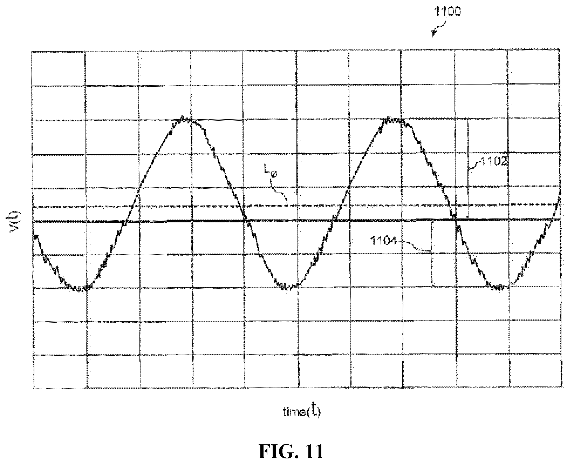

The intermittent DC voltage may be applied according to a set amplitude skew or phase skew. FIG. 11 provides a plot of a variable frequency waveform with an applied phase or amplitude skew for setpoint control, according to an example embodiment of the present disclosure.

In particular, the amplitude skew may increase the amplitude of sinusoidal motion for the linear compressor 100 in the positive axial direction A(+). The amplitude skew is applied across a plurality of sinusoidal cycles (i.e., strokes) of the piston assembly 114 as it travels between bottom dead center ($x_{BDC}$) and top dead center ($x_{TDC}$). Thus, the amplitude skew may increase half-cycle amplitude in the positive axial direction A(+), e.g., such that half-cycle amplitude in the positive axial direction A(+) 1102 (e.g., amplitude of movement above $L_0$) is greater than half-cycle amplitude in the negative axial direction A(-) 1104 (e.g., amplitude of movement below $L_0$).

As another example, the intermittent DC voltage may be applied according to a set phase skew. In particular, the phase skew may increase the wavelength of sinusoidal motion for the linear compressor 100 in the positive axial direction A(+). The phase skew is applied across a plurality of sinusoidal cycles (i.e., strokes) of the piston assembly 114 as it travels between bottom dead center ($x_{BDC}$) and top dead center ($x_{TDC}$). Thus, the phase skew may increase half-cycle wavelength in the positive axial direction A(+), e.g., such that half-cycle wavelength in the positive axial direction A(+) (e.g., wavelength or time of movement above $L_0$) is greater than half-cycle wavelength in the negative axial direction A(-) (e.g., wavelength or time of movement below $L_0$).

Thus, as described above, methods for controlling a resting setpoint and cooling capacity of an appliance have been provided. Technical effects and benefits of the above examples may include higher operational efficiency at low cooling capacity. This may result in better energy savings over the life of an appliance because high cooling capacity is generally used during only a small percentage of the operational life of an appliance. Additionally, due to a lower resting physical setpoint $L_0$, there is lower friction at low cooling capacity (e.g., friction is reduced by about 30% because the stroke length is reduced). This may further increase the longevity of an appliance due to decreased failures related to mechanical wear at the linear compressor 100. Finally, lower recompression losses (e.g., gas at low capacity is not recompressed and therefore the overall cycle is cooler) and higher peak efficiency (e.g., cooler cylinder and suction gas vs high capacity) may also be realized.

**Claims**

1. An appliance (10), comprising:

    a linear compressor (100), the linear compressor having a reciprocating piston (114) movable in a negative axial direction toward a chamber (112) and positive axial direction away from the chamber (112);

a motor operatively coupled to the reciprocating piston, the motor having a resting setpoint;

an inverter configured to supply a variable frequency waveform to the motor;

a controller configured to control the variable frequency waveform,

the appliance being **characterized by** the controller being further configured to direct a positive DC voltage to the motor, inducing an extension force at the motor in the positive axial direction to shift the resting setpoint and increase a cooling capacity of the linear compressor (100).

2. The appliance of claim 1, wherein the positive DC voltage is a constant voltage applied across a plurality of sinusoidal cycles of the variable frequency waveform.

3. The appliance of claim 1, wherein the controller is further configured to apply an amplitude skew increasing half-cycle amplitude or a phase skew increasing half-cycle wavelength in the positive axial direction for a plurality of sinusoidal cycles of the linear compressor (100).

4. The appliance of claim 1, further comprising a temperature selection control configured to select additional cooling capacity from the linear compressor.

5. The appliance of claim 1, wherein the controller is further configured to decrease the positive DC voltage to zero volts to reset the resting setpoint to return to a nominal cooling capacity of the linear compressor (100).

6. A method for operating a linear compressor of a refrigerator, the linear compressor (100) comprising a motor having a resting setpoint and a reciprocating piston movable in a negative axial direction toward a chamber (112) and positive axial direction away from the chamber (112), the method comprising:

supplying a variable frequency waveform to the motor of the linear compressor (100) to produce a reciprocal motion in the piston at a first cooling capacity;

determining that an increase in cooling capacity is required; and

directing a positive direct current, DC, voltage to the motor to induce an extension force at the motor in the positive axial direction sufficient to shift the resting point of the motor during at least a portion of the supplying step in response to the determining step.

7. The method of claim 6, wherein the positive DC voltage is a constant voltage applied across a plurality of sinusoidal cycles of the linear compressor (100).

8. The method of claim 6, further comprising applying an amplitude skew increasing half-cycle amplitude or half-cycle wavelength in the positive axial direction for a plurality of sinusoidal cycles of the linear compressor (100).

9. The method of claim 6, wherein the determining that the increase in cooling capacity is required comprises determining that a pull-down event is occurring in the refrigerator.

10. The method of claim 6, wherein the determining that the increase in cooling capacity is required comprises receiving a selection to pull-down a temperature of a storage area of the refrigerator.

11. The method of claim 6, further comprising:

determining whether additional cooling capacity is required after applying the extension force; and

increasing the positive DC voltage in response to determining that additional cooling capacity is required, increasing the positive DC voltage comprises increasing the positive DC voltage by a predetermined voltage value.

12. The method of claim 11, wherein the predetermined voltage value is chosen from a predetermined range of voltage values associated with increased cooling capacities.

**Patentansprüche**

1. Haushaltsgerät (10) mit

einem Linearkompressor (100), wobei der Linearkompressor einen hin- und hergehenden Kolben (114) aufweist, der in einer negativen axialen Richtung zu einer Kammer (112) hin und in einer positiven axialen Richtung von der Kammer (112) weg beweglich ist;

einem Motor, der operativ mit dem hin- und hergehenden Kolben gekoppelt ist, wobei der Motor einen Ruheeinstellpunkt aufweist;

einem Inverter, der dazu konfiguriert ist, dem Motor eine variable Frequenzwellenform zuzuführen;

einer Steuerung, die dazu konfiguriert ist, die variable Frequenzwellenform zu steuern,

wobei das Haushaltsgerät **dadurch gekennzeichnet ist, dass**

die Steuerung ferner dazu konfiguriert ist, dem Motor eine positive Gleichspannung zuzuführen, wodurch eine Ausdehnungskraft an dem Motor in der positiven axialen Richtung induziert wird, um den Ruheeinstellpunkt zu verschieben und eine Kühlleistung des Linearkompressors (100) zu erhöhen.

2. Haushaltsgerät nach Anspruch 1, wobei die positive Gleichspannung eine konstante Spannung ist, die über eine Mehrzahl von Sinuszyklen der variablen Frequenzwellenform angelegt wird.

3. Haushaltsgerät nach Anspruch 1, wobei die Steuerung ferner dazu konfiguriert ist, eine Amplitudenunsymmetrie, die eine Halbzyklusamplitude erhöht, oder eine Phasenunsymmetrie, die eine Halbzykluswellenlänge erhöht, in der positiven axialen Richtung für eine Mehrzahl von Sinuszyklen des Linearkompressors (100) anzuwenden.

4. Haushaltsgerät nach Anspruch 1, ferner mit einer Temperaturwahlsteuerung, die dazu konfiguriert ist, eine zusätzliche Kühlleistung von dem Linearkompressor auszuwählen.

5. Haushaltsgerät nach Anspruch 1, wobei die Steuerung ferner dazu konfiguriert ist, die positive Gleichspannung auf null Volt zu verringern, um den Ruheeinstellpunkt zurückzusetzen, um zu einer nominalen Kühlleistung des Linearkompressors (100) zurückzukehren.

6. Verfahren zum Betreiben eines Linearkompressors eines Kühlschranks, wobei der Linearkompressor (100) einen Motor mit einem Ruheeinstellpunkt und einen hin- und hergehenden Kolben aufweist, der in einer negativen axialen Richtung zu einer Kammer (112) hin und in einer positiven axialen Richtung von der Kammer (112) weg beweglich ist, wobei das Verfahren umfasst:

Zuführen einer variablen Frequenzwellenform zu dem Motor des Linearkompressors (100), um eine Hin- und Herbewegung des Kolbens mit einer ersten Kühlleistung zu erzeugen; Bestimmen, dass eine Erhöhung der Kühlleistung erforderlich ist; und Zuleiten einer positiven Gleichspannung, DC, zu dem Motor, um eine Ausdehnungskraft an dem Motor in der positiven axialen Richtung zu induzieren, die ausreicht, um den Ruhepunkt des Motors während mindestens eines Teils des Zuführungsschritts als Reaktion auf den Bestimmungsschritt zu verschieben.

7. Verfahren nach Anspruch 6, wobei die positive Gleichspannung eine konstante Spannung ist, die über eine Mehrzahl von Sinuszyklen des Linearkompressors (100) angelegt wird.

8. Verfahren nach Anspruch 6, das ferner den folgenden Schritt umfasst:
Anwenden einer Amplitudenunsymmetrie, die eine Halbzyklusamplitude erhöht, oder einer Halbzykluswellenlänge in der positiven axialen Richtung für eine Mehrzahl von Sinuszyklen des Linearkompressors (100).

9. Verfahren nach Anspruch 6, wobei das Bestimmen, dass die Erhöhung der Kühlleistung erforderlich ist, den folgenden Schritt umfasst:
Bestimmen, ob ein Schnellkühlereignis in dem Kühlschrank auftritt.

10. Verfahren nach Anspruch 6, wobei das Bestimmen, dass die Erhöhung der Kühlleistung erforderlich ist, den folgenden Schritt umfasst:
Empfangen einer Auswahl, um eine Temperatur eines Lagerbereichs des Kühlschranks schnell abzusenken.

11. Verfahren nach Anspruch 6, ferner mit den folgenden Schritten:

Bestimmen, ob eine zusätzliche Kühlleistung erforderlich ist, nachdem die Ausdehnungskraft angewendet wurde; und Erhöhen der positiven Gleichspannung als Reaktion auf das Bestimmen, dass eine zusätzliche Kühlleistung erforderlich ist, wobei das Erhöhen der positiven Gleichspannung Erhöhen der positiven Gleichspannung um einen vorbestimmten Spannungswert umfasst.

12. Verfahren nach Anspruch 11, wobei der vorbestimmte Spannungswert aus einem vorbestimmten Bereich von Spannungswerten ausgewählt wird, die mit erhöhten Kühlleistungen verbunden sind.

**Revendications**

1. Appareil (10), comprenant :

un compresseur linéaire (100), le compresseur linéaire présentant un piston alternatif (114) mobile dans une direction axiale négative vers une chambre (112) et dans une direction axiale positive s'éloignant de la chambre (112) ; un moteur couplé fonctionnellement au piston alternatif, le moteur présentant un point de consigne de repos ; un onduleur configuré pour fournir une forme d'onde à fréquence variable au moteur; un dispositif de commande configuré pour commander la forme d'onde à fréquence variable, l'appareil étant **caractérisé par le fait que** le dispositif de commande est en outre configuré pour diriger une tension CC positive vers le moteur, induisant une force d'extension au niveau du moteur dans la direction axiale positive pour déplacer le point de consigne de repos et augmenter la capacité de refroidissement du compresseur linéaire (100).

2. Appareil selon la revendication 1, dans lequel la tension CC positive est une tension constante appliquée sur une pluralité de cycles sinusoïdaux de la forme d'onde à fréquence variable.

3. Appareil selon la revendication 1, dans lequel le dispositif de commande est en outre configuré pour appliquer un décalage d'amplitude augmentant l'amplitude du demi-cycle ou un décalage de phase augmentant la longueur d'onde du demi-cycle dans la direction axiale positive pour une pluralité de cycles sinusoïdaux du compresseur linéaire (100).

4. Appareil selon la revendication 1, comprenant en outre une commande de sélection de température configurée pour sélectionner une capacité de refroidissement supplémentaire du compresseur linéaire.

5. Appareil selon la revendication 1, dans lequel le dispositif de commande est en outre configuré pour diminuer la tension CC positive à zéro volt afin de réinitialiser le point de consigne de repos pour revenir à une capacité de refroidissement nominale du compresseur linéaire (100).

6. Procédé de fonctionnement d'un compresseur linéaire d'un réfrigérateur, le compresseur linéaire (100) comprenant un moteur présentant un point de consigne de repos et un piston alternatif se déplaçant dans une direction axiale négative vers une chambre (112) et dans une direction axiale positive s'éloignant de la chambre (112), le procédé comprenant :

la fourniture d'une forme d'onde à fréquence variable au moteur du compresseur linéaire (100) pour produire un mouvement alternatif dans le piston à une première capacité de refroidissement ;
la détermination qu'une augmentation de la capacité de refroidissement est nécessaire ; et
la direction d'une tension continue positive, CC, vers le moteur pour induire une force d'extension au niveau du moteur dans la direction axiale positive suffisante pour déplacer le point de repos du moteur pendant au moins une partie de l'étape d'alimentation en réponse à l'étape de détermination.

7. Procédé selon la revendication 6, dans lequel la tension CC positive est une tension constante appliquée sur une pluralité de cycles sinusoïdaux du compresseur linéaire (100).

8. Procédé selon la revendication 6, comprenant en outre l'application d'un décalage d'amplitude augmentant l'amplitude de demi-cycle ou la longueur d'onde de demi-cycle dans la direction axiale positive pour une pluralité de cycles sinusoïdaux du compresseur linéaire (100).

9. Procédé selon la revendication 6, dans lequel la détermination de la nécessité d'une augmentation de la capacité de refroidissement comprend la détermination qu'un événement de réduction de la capacité se produit dans le réfrigérateur.

10. Procédé selon la revendication 6, dans lequel la détermination de la nécessité d'augmenter la capacité de refroidissement comprend la réception d'une sélection pour abaisser la température d'une zone de stockage du réfrigérateur.

11. Procédé selon la revendication 6, comprenant en outre :

la détermination si une capacité de refroidissement supplémentaire est nécessaire après l'application de la force d'extension ; et
l'augmentation de la tension CC positive, en réponse à la constatation qu'une capacité de refroidissement supplémentaire est nécessaire, consistant à augmenter la tension CC positive d'une valeur de tension prédéterminée.

12. Procédé selon la revendication 11, dans lequel la valeur de tension prédéterminée est choisie dans une plage prédéterminée de valeurs de tension associées à des capacités de refroidissement accrues.

FIG. 1

**FIG. 2**

FIG. 3

**FIG. 4**

14

**FIG. 5**

EP 3 971 417 B1

FIG. 6

**FIG. 7**

—800

—802

SUPPLYING A VARIABLE FREQUENCY WAVEFORM TO THE
MOTOR OF THE LINEAR COMPRESSOR TO PRODUCE A
RECIPROCAL MOTION IN THE PISTON AT A FIRST COOLING
CAPACITY

—804

DETERMINING THAT AN INCREASE IN COOLING CAPACITY IS
REQUIRED

—806

DIRECTING A POSITIVE DIRECT CURRENT (DC) VOLTAGE TO
THE MOTOR TO INDUCE AN EXTENSION FORCE AT THE
MOTOR IN THE POSITIVE AXIAL DIRECTION DURING AT LEAST
A PORTION OF THE SUPPLYING STEP IN RESPONSE TO THE
DETERMINING STEP

**FIG. 8**

**FIG. 9**

**FIG. 10**

FIG. 11

**EP 3 971 417 B1**

REFERENCES CITED IN THE DESCRIPTION

**Patent documents cited in the description**

- WO 2016068675 A1
- WO 2007123323 A1
- US 2011318193 A1